# DEMANDE DE BREVET EUROPEEN

(11) **EP 4 079 390 A1**
(43) Date de publication de la demande: **26.10.2022**
(21) Numéro de dépôt: 22161879.6
(22) Date de dépôt: 14.03.2022
(51) Int. Cl.: B01D 29/01, B01D 35/027, B65D 88/76, C02F 3/00

(54) **DISPOSITIF DE FILTRATION D'EAUX USÉES POUR INSTALLATION D'ASSAINISSEMENT NON COLLECTIF**

(30) Priorité: 23.04.2021 FR 2104233
(71) Demandeur: Innoclair, 56700 Kervignac (FR)
(72) Inventeur: RAULT, Hugues, 56700 KERVIGNAC (FR)
(74) Mandataire: Lequien, Philippe

(57) **Abrégé**

L'invention concerne un dispositif (1) de filtration pour la filtration d'eaux usées, le dispositif (1) comprenant :
- une cuve (2) de filtration préfabriquée présentant un fond (21) et une paroi périphérique (22) s'étendant à partir du fond ;
- des moyens d'entrée (3) des eaux usées dans la cuve de filtration ;
- au moins un étage de filtration (4) situé dans la cuve (2) de filtration ;
- une pompe (6) de relevage installée dans la cuve (2) de filtration ;
la cuve (2) de filtration comprenant un lest (5) interne prenant place sur le fond (21) et s'étendant au-dessus de celui-ci, le lest (5) interne ménageant un emplacement (50) de réception de la pompe (6) de relevage.

## Description

Le domaine de l'invention concerne la conception et la fabrication des équipements de traitement des eaux usées. Plus précisément, l'invention concerne un dispositif de filtration d'eaux usées, du type intégrant une cuve de filtration destinée à recevoir des eaux usées prétraitées par une fosse septique.

Dans le cas d'un assainissement non collectif, on distingue les habitations reliées au réseau de collecte de leur commune et celles qui ne le sont pas. Les habitations non reliées au réseau de collecte sont généralement équipées d'une fosse septique pour le traitement des eaux usées domestiques (hors eaux pluviales) associée à un système de filtration tel qu'un bac à sable filtrant.

Il existe également des cuves, dites cuves de filtration, qui sont couplées à des fosses septiques dans lesquelles sont prétraitées les eaux usées.

Une telle cuve de filtration comprend un volume interne à l'intérieur duquel des eaux usées sont apportées pour être filtrées par au moins un étage de filtration situé à l'intérieur de la cuve de filtration.

Une pompe de relevage installée dans la cuve de filtration, sur le fond de cette dernière, est destinée à aspirer les eaux filtrées pour les évacuer.

Une installation non collective de traitement d'eaux usées peut classiquement comprendre des cuves préfabriquées destinées à être enterrées dans des fosses.

Les cuves peuvent être préfabriquées en béton et, présentant un poids particulièrement important, et impliquent alors des contraintes pour leur transport et leur installation relatives à ce poids.

Ces cuves peuvent également être en plastique. Elles sont ainsi plus faciles à transporter et à installer.

Toutefois, elles sont soumises à des contraintes spécifiques résultant du volume qu'elles occupent, et de la résistance ainsi que la densité plus faible du matériau plastique par rapport à un matériau plus résistant et dense, tel que le béton.

En effet, du fait qu'elles sont enterrées dans des fosses et recouvertes par un matériau de comblement, des cuves « légères » en matériau plastique peuvent avoir tendance à ressortir de terre sous l'effet d'une submersion de la fosse, ou de la présence d'une nappe phréatique, et des contraintes exercées par les eaux selon le principe de la poussée d'Archimède.

Une problématique relative aux dispositifs de filtration comprenant une cuve préfabriquée en matériau pouvant être qualifiés de « légers » réside ainsi dans les mesures palliatives à mettre en oeuvre lors de l'installation de la cuve pour éviter qu'elle ne ressorte de terre, par exemple par le biais d'un ceinturage en béton de la cuve préalablement au remblaiement de la fosse accueillant la cuve.

Pour les cuves de filtration, il est constaté un problème relatif à certains types de matériaux de filtration susceptibles de surnager mis en œuvre dans l'étage de filtration et à des situations dans lesquelles les pompes de relevage ne fonctionnent plus (panne d'électricité par exemple).

Dans une telle situation, un risque de dégradation des éléments de la cuve est probable à cause de l'élévation anormale du niveau des eaux à l'intérieur de la cuve.

L'élévation du niveau d'eau dans la cuve, entraîne en effet une remontée des matériaux de filtration surnageant, et une dégradation des éléments sus-jacents. Les différents éléments pouvant être dégradés sont notamment les tuyaux et des moyens d'entrée des eaux usées dans la cuve de filtration.

Dans ce cas, il est alors nécessaire de réaliser une révision en profondeur de la cuve nécessitant une intervention lourde et coûteuse. Une telle intervention nécessite souvent l'entrée dans la cuve d'un opérateur qui, dans un contexte de gaz dangereux type Hydroxyde de soufre et méthane, doit être pourvu d'équipements personnels de protection tel qu'un scaphandre.

Il est également connu le document de brevet publié sous le numéro FR 2 608 938 A1 qui décrit un système de filtration d'une piscine.

L'invention a notamment pour objectif de pallier aux inconvénients de l'art antérieur.

Plus précisément, l'invention a pour objectif de proposer un dispositif de filtration comprenant une cuve de filtration préfabriquée dont l'installation est plus aisée à réaliser que celles selon l'art antérieur.

L'invention a également pour objectif de proposer un tel dispositif qui est apte à rester enterré en cas de présence de nappes phréatiques ou de submersion de la fosse dans laquelle la cuve est enterrée.

L'invention a encore pour objectif de fournir un tel dispositif qui présente une capacité à ne pas se dégrader de manière trop importante dans le cas où la pompe de relevage est inopérante et que le niveau des eaux à l'intérieur de la cuve de filtration atteint des niveaux anormaux.

Ces objectifs, ainsi que d'autres qui apparaitront par la suite, sont atteints grâce à l'invention qui a pour objet un dispositif de filtration pour la filtration d'eaux usées, le dispositif comprenant :
- une cuve de filtration préfabriquée présentant un fond et une paroi périphérique s'étendant à partir du fond ;
- des moyens d'entrée des eaux usées dans la cuve de filtration ;
- au moins un étage de filtration situé dans la cuve de filtration ;
- une pompe de relevage installée dans la cuve de filtration ; caractérisé en ce que la cuve de filtration comprend un lest interne prenant place sur le fond et s'étendant au-dessus de celui-ci, le lest interne ménageant un emplacement de réception de la pompe de relevage. et en ce qu'il comprend :
- des barres de renfort s'étendant horizontalement dans la cuve de filtration ;
- un étage inférieur de filtration sous-jacent aux barres de renfort, l'étage inférieur de filtration étant formé par un média filtrant susceptible de surnager, les barres de renfort formant des moyens de contention de l'étage inférieur de filtration.

Grâce au dispositif selon l'invention, l'installation de la cuve de filtration est aisée.

En effet, le lest interne permet d'éviter d'avoir à rajouter systématiquement un lest externe à la cuve de filtration.

Par exemple, il n'est pas impératif de couler une ceinture de béton autour de la cuve de filtration, ou à tout le moins les moyens de lestage externes peuvent être diminués par rapport à ce qui aurait été nécessaire en l'absence d'un lest interne.

De plus, le lest interne ménage un emplacement de réception pour la pompe de relevage qui est ainsi située dans un volume restreint à l'extrémité basse de la cuve de filtration. En conséquence, les eaux filtrées ont tendance à se regrouper dans l'emplacement de réception de la pompe de relevage.

Les barres de renfort permettent à la cuve de filtration de résister de manière plus importante à des contraintes extérieures pouvant s'exercer sur la cuve de filtration, notamment lors d'une éventuelle submersion de la fosse dans laquelle la cuve est enterrée ou du fait de la présence du matériau de remblaiement qui viennent exercer une pression latérale sur la paroi périphérique de la cuve de filtration.

De plus, les barres de renfort qui forment des moyens de contention de l'étage inférieur de filtration évitent que, lors de l'arrêt d'alimentation de la pompe de relevage et la montée des eaux à l'intérieur de la cuve, l'étage inférieur de filtration ne remonte à une hauteur trop importante dans la cuve de filtration et ne dégrade les éléments sus-jacents.

Selon une caractéristique avantageuse, le lest interne est moulé dans la cuve de filtration.

Dans ce cas, la forme du lest interne est particulièrement adaptée à la forme du fond de la cuve. Ceci permet d'optimiser le lest interne et la collecte des eaux filtrées à l'intérieur de l'emplacement de réception.

Avantageusement, le lest interne est en matériaux pondéreux, préférentiellement en béton.

Un tel lest interne en béton est aisé à mettre en œuvre. Il suffit de positionner un mannequin de coffrage à la place de l'emplacement de réception, puis de couler le béton dans la cuve, autour du mannequin de coffrage.

Le lest interne peut être réalisé en usine avant l'installation de la cuve dans une fosse, ou après son installation.

Selon une autre caractéristique avantageuse, le lest interne est formé par une chambre étanche apte à être remplie.

De cette manière, la chambre étanche est remplie avec un liquide, par exemple de l'eau, uniquement après que la cuve a été installée dans une fosse. Ceci simplifie la manutention de la cuve pour son installation.

Selon une conception préférentielle, la paroi périphérique présente une corrugation horizontale à proximité immédiate du fond et faisant saillie à l'intérieur de la cuve de filtration, la corrugation présentant une section de forme triangulaire présentant un pan inférieur qui forme une surface d'appui contre laquelle un matériau de remblaiement est susceptible d'exercer une force dirigée vers le fond de la cuve de filtration.

Grâce à cette corrugation horizontale et au pan inférieur qui forme une surface d'appui, le remblaiement de la fosse autour de la cuve permet au matériau de remblaiement de venir se loger dans le creux formé par la corrugation. Ce matériau de remblaiement vient alors exercer une pression contre la surface d'appui et produire une force dirigée vers le fond de la cuve de filtration. De cette manière, la cuve de filtration a moins tendance à se déterrer sous l'effet d'une submersion de la fosse ou de la présence d'une nappe phréatique.

Préférentiellement, le lest interne prend place à l'intérieur de la cuve de filtration dans un volume délimité par le pan inférieur de la corrugation et le fond.

La fonction de cette corrugation se combine avec la présence du lest interne. En effet, le lest interne prend place dans le fond de la cuve.

En conséquence, le lest interne est susceptible de remplir le volume délimité à l'intérieur de la cuve en hauteur par le pan inférieur de la corrugation. Ceci renforce la partie de la cuve correspondante, et lorsqu'un matériau de remblaiement exerce une force contre le pan inférieur, alors ce pan inférieur est étayé par le lest interne et les efforts se répartissent de manière plus harmonieuse sur l'ensemble de la cuve de filtration. Une synergie se produit ainsi entre la forme particulière de la paroi périphérique et la présence d'un lest interne.

Selon un mode de réalisation avantageux, le dispositif comprend un étage supérieur de filtration sous-jacent aux moyens d'entrée des eaux usées, l'étage supérieur de filtration comprenant :
- des barres de suspension s'étendant horizontalement dans la cuve de filtration ;
- un géotextile suspendu en vagues aux barres de suspension, le géotextile étant destiné à être colonisé par des microorganismes.

Un tel étage de filtration permet une filtration microbienne par des microorganismes des eaux à filtrer.

Préférentiellement, les barres de renfort sont sous-jacentes à l'étage supérieur de filtration.

On combine ainsi un étage supérieur de filtration à un étage inférieur de filtration tout en évitant que l'étage inférieur de filtration ne puisse dégrader l'étage supérieur de filtration en cas d'arrêt de la pompe de relevage.

Préférentiellement, les moyens d'entrée comprennent :
- un bac tampon de rétention des eaux usées entrantes dans la cuve ;
- un mécanisme de vidange du bac tampon à partir d'une hauteur prédéterminée de remplissage du bac tampon ;
- une tuyauterie de répartition des eaux usées et d'aspersion par jets.

Ces moyens d'entrée d'eau à filtrer permettent une alimentation intermittente des étages de filtration.

D'autres caractéristiques et avantages de l'invention apparaîtront plus clairement à la lecture de la description suivante d'un mode de réalisation préférentiel de l'invention, donné à titre d'exemple illustratifs et non limitatif, et des dessins annexés parmi lesquels :
- la figure 1 est une représentation schématique en coupe partielle, selon une vue en perspective de dessus, d'un dispositif de filtration selon l'invention, comprenant une cuve de filtration et une fosse septique ;
- la figure 2 est une représentation schématique selon une vue en perspective de dessus d'une partie de la cuve de filtration du dispositif de filtration selon l'invention ;
- la figure 3 est une représentation schématique selon une coupe transversale de la cuve de filtration du dispositif de filtration selon l'invention, les eaux filtrées ressortant via une pompe de relevage installée dans la cuve de filtration.

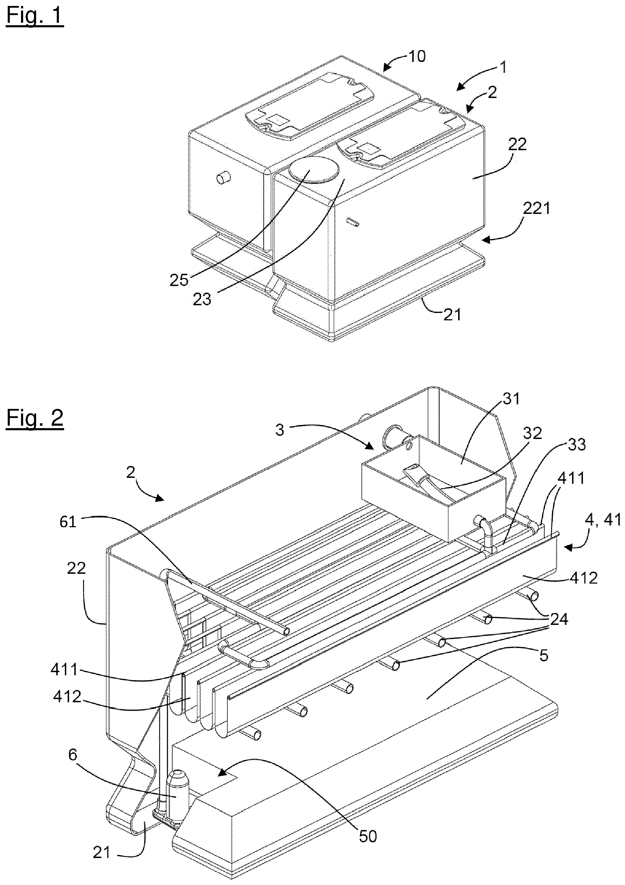

En référence aux figures 1 à 3, un dispositif 1 de filtration pour la filtration d'eaux usées est représenté.

Selon la figure 1, le dispositif 1 de filtration comprend une cuve 2 de filtration.

Par le terme « comprendre », il est entendu « être partiellement ou complètement composé de ». Le terme «comprendre» n'exclut pas que d'autres éléments non-cités après ce terme puissent être également inclus.

Le dispositif 1 comprend également une fosse septique 10 accouplée à la cuve 2 de filtration. La fosse septique 10 est structurellement indépendante de la cuve 2 de filtration et est accouplée, par exemple par le biais de moyens de fixation.

La cuve 2 de filtration, et la fosse septique 10 le cas échéant, sont du type destiné à être enterré lors de leur installation.

L'installation du dispositif 1 implique ainsi le creusement d'une fosse, l'insertion de la cuve 2 de filtration et de la fosse septique 10 dans la fosse, et le remblaiement de la fosse autour et au-dessus du dispositif 1 de filtration.

La cuve 2 de filtration et la fosse septique 10 sont préfabriquées.

C'est-à-dire que la cuve 2 de filtration et la fosse septique 10 sont fabriquées en usine et destinées à être transportées sur un site d'installation.

La fosse septique 10 est destinée à traiter des eaux usées. Ces eaux usées prétraitées par la fosse septique 10 sont ensuite acheminées dans la cuve 2 de filtration.

Suite à la filtration par l'intermédiaire de la cuve 2 de filtration, les eaux filtrées sont évacuées hors de la cuve 2 de filtration.

La cuve 2 de filtration est décrite plus en détails par la suite en référence aux figures 1 à 3.

La cuve 2 de filtration présente un fond 21, une paroi périphérique 22 s'étendant à partir du fond 21, et une paroi supérieure 23 refermant la cuve 2 de filtration. La paroi périphérique 22 s'étend ainsi entre le fond 21 et la paroi supérieure 23.

La paroi supérieure 23 présente une ouverture 24 destinée à être refermée par un regard 25.

L'ouverture 24 présente un pas fileté complémentaire d'un filetage présenté par le regard 25. L'installation et la désinstallation du regard 25 sur l'ouverture 24 sont ainsi réalisées par vissage ou dévissage du regard 25.

Selon le présent mode de réalisation, le fond 21 présente une forme rectangulaire. Le fond 21 est plat.

La paroi périphérique 22 présente quant à elle quatre faces.

Tel que cela est visible sur les figures, la paroi périphérique 22 présente une corrugation 221 horizontale à proximité immédiate du fond 21. Cette corrugation 221 horizontale fait saillie à l'intérieur de la cuve 2 de filtration. La corrugation 221 forme en d'autres termes un renfoncement vers l'intérieur de la cuve 2.

Plus précisément, la corrugation 221 horizontale s'étend sur trois des faces de la paroi périphérique 22. La quatrième face est ainsi dénuée de corrugation.

Toutefois, il est envisageable que la corrugation 221 horizontale puisse s'étendre sur les quatre faces de la paroi périphérique 22, ou sur deux faces opposées l'une à l'autre.

La corrugation 221 présente une section de forme triangulaire, et comprend un pan inférieur 2211 et un pan supérieur 2222.

Selon le présent mode de réalisation, le pan supérieur 2222 est le symétrique du pan inférieur 2211 par rapport à un plan parallèle au fond 21 et qui sépare la corrugation 221 horizontale en son centre.

Le pan inférieur 2211 de la corrugation 221 forme une surface d'appui contre laquelle un matériau de remblaiement est susceptible d'exercer une force dirigée vers le fond 21 de la cuve 2 de filtration.

En effet, le matériau de remblaiement utilisé pour combler la cavité autour de la cuve de filtration insérée dans une fosse vient prendre place dans le creux délimité par la corrugation 221 horizontale et peut ainsi s'appuyer contre le pan inférieur 2211.

Il est à noter que le pan inférieur 2211 de la corrugation 221 horizontale délimite un tronc de pyramide dont la section transversale s'évase en direction du fond 21.

De manière plus générale, le dispositif 1 comprend :
- des moyens d'entrée 3 des eaux usées dans la cuve 2 de filtration ;
- au moins un étage de filtration 4, et plus précisément deux étages de filtration 4 situés dans la cuve 2 de filtration ;
- une pompe 6 de relevage installée dans la cuve 2 de filtration.

La cuve 2 de filtration comprend également un lest 5 interne qui prend place sur le fond 21 et qui s'étend au-dessus de celui-ci. Le lest 5 interne ménage également un emplacement 50 de réception de la pompe 6 de relevage. Cet emplacement 50 correspond en d'autres termes à une réservation.

Selon le présent mode de réalisation, le lest 5 interne est moulé dans la cuve de filtration.

Plus précisément, ce lest 5 interne est en béton. En d'autres termes, le béton est moulé directement dans la cuve 2 de filtration.

Il est envisagé l'usage d'autres matériaux de lestage, ou matériaux pondéreux, qui présenteraient des caractéristiques similaires au béton (densité, capacité à être moulé dans la cuve 2...).

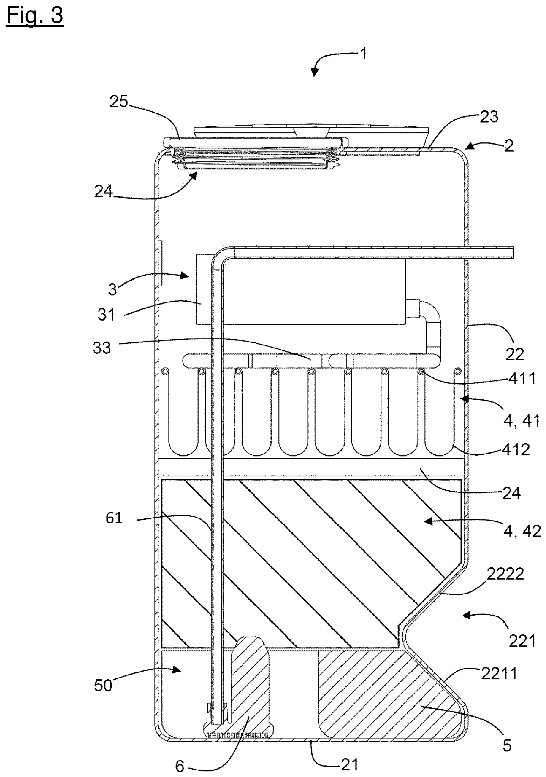

Tel que cela est illustré par les figures 2 et 3, le lest 5 interne prend place à l'intérieur de la cuve 2 de filtration dans un volume délimité par le pan inférieur 2211 de la corrugation 221 et le fond 21.

En conséquence, le lest 5 interne adopte une forme de tronc de pyramide de par la forme imposée par la corrugation 221 horizontale.

Pour ménager l'emplacement 50 de réception de la pompe 6 de relevage, un mannequin de coffrage est installé dans la cuve 2 préalablement au coulage du matériau de lestage.

Selon un autre mode de réalisation, non représenté, le lest 5 interne est formé par une chambre étanche apte à être remplie avec un liquide tel que de l'eau.

La chambre étanche est alors formée par une paroi interne de la cuve 2, qui délimite en coopération avec le fond 21 et la paroi périphérique 22 le volume de la chambre étanche.

Cette chambre étanche peut être remplie par une ouverture obturable de manière étanche à l'aide d'un bouchon. L'ouverture est présentée par la paroi interne de la cuve 2 et est accessible par l'intérieur de la cuve 2.

La paroi interne décrit avantageusement la forme du lest 5 interne du mode de réalisation illustré par la figure 2. Le volume de la chambre interne prend alors la forme du lest 5 interne du mode de réalisation de la figure 2.

Selon un autre variant de réalisation, il est envisageable que le lest 5 interne soit formé par une réserve souple étanche conçue à partir d'une membrane souple, tel qu'une membrane EPDM, remplie par un liquide.

Tel qu'évoqué précédemment, le dispositif 1 comprend des moyens d'entrée 3 des eaux usées dans la cuve 2 de filtration.

Les moyens d'entrée 3 comprennent plus précisément :
- un bac tampon 31 de rétention des eaux usées entrantes dans la cuve 2 de filtration ;
- un mécanisme de vidange 32 du bac tampon ;
- une tuyauterie 33 de répartition des eaux usées et d'aspersion par jet.

Le mécanisme de vidange 32 du bac tampon 31 est configuré pour vidanger le bac tampon 31 à partir d'une hauteur prédéterminée de remplissage de ce bac tampon 31.

Le mécanisme prend par exemple la forme d'un godet monté sur un bras flexible, le godet ne pouvant se déplacer au-dessus de la hauteur prédéterminée de remplissage. Dès que la hauteur prédéterminée de remplissage est atteinte, l'eau rentre dans le godet et abaisse le godet, provoquant alors la vidange du réservoir et du godet.

Lors de la vidange du bac tampon 31, la tuyauterie 33 est alimentée et cette dernière répartie de manière homogène l'eau vidangée par jets sur toute la superficie de la cuve 2 de filtration des eaux usées.

Tel qu'évoqué précédemment, le dispositif 1 de filtration comprend, selon le présent mode de réalisation, deux étages de filtration 4. Plus précisément, le dispositif 1 de filtration comprend :l
- un étage supérieur 41 de filtration ;
- un étage inférieur 42 de filtration.

L'étage supérieur 41 de filtration est sous-jacent au moyen d'entrée 3 des eaux usées. Plus précisément, cet étage supérieur 41 de filtration est sous-jacent à la tuyauterie 33.

Les moyens d'entrée 3 des eaux usées permettent ainsi de répartir les eaux usées de manière homogène sur l'étage supérieur 41 de filtration.

Cet étage supérieur 41 de filtration comprend des barres de suspension 411 qui s'étendent horizontalement dans la cuve 2 de filtration.

Ces barres de suspension 411 sont couplées sur la paroi périphérique 22.

L'étage supérieur 41 de filtration comprend également un géotextile 412 qui est suspendu en vague aux barres de suspension 411. Ce géotextile 412 peut par exemple être en matière synthétique type polyéthylène ou polypropylène.

Ce géotextile 412 est destiné à être colonisé par des micro-organismes pour réaliser la filtration des eaux usées.

L'étage inférieur 42 de filtration est sous-jacent à l'étage supérieur 41 de filtration. Cet étage inférieur 42 de filtration est formé par un média filtrant qui est susceptible de surnager.

Ce média filtrant peut par exemple être composé de de laine de roche, d'argile expansées, de fibres de coco, de fibres de bois, ou encore de fibres synthétiques.

Le dispositif 1 comprend également des barres de renfort 24 qui s'étendent horizontalement dans la cuve 2 de filtration.

Ces barres de renfort 24 sont intercalées entre l'étage supérieur 41 de filtration et l'étage inférieur 42 de filtration.

En conséquence, l'étage inférieur 42 de filtration est sous-jacent aux barres de renfort 24.

De ce fait, les barres de renfort 24 permettent de former des moyens de contention de l'étage inférieur 42 de filtration.

En d'autres termes, les barres de renfort 24 empêchent une remontée du média filtrant formant l'étage inférieur 42 de filtration au-delà de la hauteur des barres de renfort 24.

Ces barres de renfort 24 sont formées par des tubes couplés à la paroi périphérique 22.

Ces barres de renfort 24 sont réparties régulièrement à une hauteur donnée de la cuve 2 de filtration.

L'étage inférieur 42 de filtration est ainsi intercalé entre les barres de renfort 24 et le lest 5 interne.

Tel que cela est illustré par les figures 2 et 3, la pompe 6 de relevage est insérée dans la cuve 2 et prend place dans l'emplacement 50 de réception, sur le fond 21 de la cuve 2.

Un tuyau 61 permettant d'acheminer les eaux filtrées en dehors de la cuve 2 est couplé à la pompe 6 et s'étend dans la cuve en hauteur puis transversalement pour ressortir de la cuve 2.

Cette pompe 6 de relevage est bien entendu alimentée en électricité par une source d'électricité.

## Revendications

1. Dispositif (1) de filtration pour la filtration d'eaux usées, le dispositif (1) comprenant :
- une cuve (2) de filtration préfabriquée présentant un fond (21) et une paroi périphérique (22) s'étendant à partir du fond ;
- des moyens d'entrée (3) des eaux usées dans la cuve de filtration ;
- au moins un étage de filtration (4) situé dans la cuve (2) de filtration ;
- une pompe (6) de relevage installée dans la cuve (2) de filtration ;
**caractérisé en ce que** la cuve (2) de filtration comprend un lest (5) interne prenant place sur le fond (21) et s'étendant au-dessus de celui-ci, le lest (5) interne ménageant un emplacement (50) de réception de la pompe (6) de relevage,
et **en ce qu'**il comprend :
- des barres de renfort (24) s'étendant horizontalement dans la cuve (2) de filtration ;
- un étage inférieur (42) de filtration sous-jacent aux barres de renfort (24), l'étage inférieur (42) de filtration étant formé par un média filtrant susceptible de surnager, les barres de renfort (24) formant des moyens de contention de l'étage inférieure (42) de filtration.

2. Dispositif (1) selon la revendication précédente, **caractérisé en ce que** le lest (5) interne est moulé dans la cuve (2) de filtration.

3. Dispositif (1) selon la revendication précédente, **caractérisé en ce que** le lest (5) interne est en matériaux pondéreux, préférentiellement en béton.

4. Dispositif (1) selon la revendication 1, **caractérisé en ce que** le lest (5) interne est formé par une chambre étanche apte à être remplie avec un liquide.

5. Dispositif (1) selon l'une quelconque des revendications précédentes, **caractérisé en ce que** la paroi périphérique (22) présente une corrugation (221) horizontale à proximité immédiate du fond (21) et faisant saillie à l'intérieur de la cuve (2) de filtration, la corrugation (221) présentant une section de forme triangulaire présentant un pan inférieur (2211) qui forme une surface d'appui contre laquelle un matériau de remblaiement est susceptible d'exercer une force dirigée vers le fond (21) de la cuve (2) de filtration.

6. Dispositif (1) selon la revendication précédente et l'une quelconque des revendications 2 à 4, **caractérisé en ce que** le lest (5) interne prend place à l'intérieur de la cuve (2) de filtration dans un volume délimité par le pan inférieur (2211) de la corrugation (221) et le fond (21).

7. Dispositif (1) selon l'une quelconque des revendications précédentes, **caractérisé en ce qu'**il comprend un étage supérieur (41) de filtration sous-jacent aux moyens d'entrée (3) des eaux usées, l'étage supérieur (41) de filtration comprenant :
- des barres de suspension (411) s'étendant horizontalement dans la cuve (2) de filtration ;
- un géotextile (412) suspendu en vagues aux barres de suspension (411), le géotextile (412) étant destiné à être colonisé par des microorganismes.

8. Dispositif (1) selon la revendication 7, **caractérisé en ce que** les barres de renfort (24) sont sous-jacentes à l'étage supérieur (41) de filtration.

9. Dispositif (1) selon l'une quelconque des revendications précédentes, **caractérisé en ce que** les moyens d'entrée (3) comprennent :
- un bac tampon (31) de rétention des eaux usées entrantes dans la cuve (2) de filtration ;
- un mécanisme de vidange (32) du bac tampon à partir d'une hauteur prédéterminée de remplissage du bac tampon ;
- une tuyauterie (33) de répartition des eaux usées et d'aspersion par jets.
